# EUROPÄISCHE PATENTANMELDUNG

(11) **EP 3 686 871 A1**
(43) Veröffentlichungstag der Anmeldung: **29.07.2020**
(21) Anmeldenummer: 20020079.8
(22) Anmeldetag: 09.11.2015
(51) Int. Cl.: G09C 1/00, H04L 9/06, H04L 9/08

(54) **VERFAHREN ZUM HÄRTEN VON SOFTWAREAPPLIKATIONEN**

(30) Priorität: 10.11.2014 DE 102014016548
(62) Teilanmeldung aus: 15801327.6
(71) Anmelder: Giesecke+Devrient Mobile Security GmbH, 81677 München (DE)
(72) Erfinder: Hermann, Drexler, 80337 München (DE); Sven, Bauer, 85591 Vaterstetten (DE)

(57) **Zusammenfassung**

Es werden Verfahren zum einen zum Testen von und zum anderen zum Härten von Softwareapplikationen zum Durchführen von digitalen Transaktionen bereitgestellt, die eine "White Box"-Implementierung eines kryptographischen Algorithmus umfassen. Das Verfahren zum Testen einer "White Box"-Implementierung eines kryptographischen Algorithmus, die mittels eines geheimen Schlüssels aus einem Plaintext einen Ciphertext erzeugt und auf einem Prozessor mit wenigstens einem Register in Form von Maschinenbefehlen vorliegt, umfasst die folgenden Schritte: (a) das Einspeisen eines Plaintexts einer Vielzahl von Plaintexten in die "White Box"-Implementierung; (b) das schrittweise Auslesen und Abspeichern des Inhalts des wenigstens einen Registers des Prozessors beim schrittweise Ab-arbeiten der Maschinenbefehle der "White Box"-Implementierung, wobei beim schrittweise Abarbeiten der Maschinenbefehle der "White Box"-Implementierung Zwischenergebnisse erzeugt werden können; (c) das N-malige Wiederholen der Schritte (a) und (b) mit einem weiteren Plaintext der Vielzahl von Plaintexten; und (d) das statistische Auswerten der Inhalte der Register und der Plaintexte, der Zwischenergebnisse und/oder der aus den Plaintexten erzeugten Ciphertexte, indem nach Korrelationen zwischen den Inhalten der Register und den Plaintexten, den Zwischenergebnissen und/oder den Ciphertexten gesucht wird, um den geheimen Schlüssel zu ermitteln.

## Beschreibung

### Gebiet der Erfindung

Die Erfindung betrifft allgemein das technische Gebiet des Schützens von Softwareapplikationen gegen Angriffe. Insbesondere betrifft die Erfindung Verfahren zum einen zum Testen von und zum anderen zum Härten von Softwareapplikationen zum Durchführen von digitalen Transaktionen, die eine "White Box"-Implementierung eines kryptographischen Algorithmus umfassen.

### Hintergrund der Erfindung

Mehr und mehr werden mobile Endgeräte in Form von Smartphones dazu verwendet, digitale Transaktionen durchzuführen, beispielsweise zum bargeldlosen Bezahlen an einem NFC-Terminal oder zum Kauf einer Ware oder einer Dienstleistung bei einem Online-Versandhändler. Bei der Durchführung einer solchen digitalen Transaktion interagiert in der Regel eine auf dem Smartphone implementierte Softwareapplikation (kurz "App" genannt) mit einem Terminal bzw. Server. Dabei ist häufig ein kryptographischer Algorithmus, z.B. ein Verschlüsselungsalgorithmus, Teil der auf dem mobilen Endgerät implementierten Softwareapplikation, die auf sicherheitskritische Daten, z.B. PINs, Passwörter, Schlüssel etc., zugreift. In der Vergangenheit sind sicherheitskritische Daten in der Regel auf einem eigenständigen Sicherheitselement des mobilen Endgeräts häufig in Form einer aus dem mobilen Endgerät herausnehmbaren SIM-Karte hinterlegt worden, um diese vor einem Angriff durch unbefugte Person zu schützen.

Ein neuerer Ansatz, der insbesondere bei der Durchführung von digitalen Transaktionen mit einem mobilen Endgerät vorteilhaft eingesetzt werden kann, dass kein eigenständiges Sicherheitselement zum sicheren Speichern von sicherheitskritischen Daten aufweist, basiert auf der sogenannten "White Box"-Kryptographie. Bei einer "White Box"-Implementierung eines kryptographischen Algorithmus wird versucht, die sicherheitskritischen Daten, insbesondere geheime kryptographische Schlüssel, derart in der Implementierung zu verbergen, dass ein Angreifer, der vollen Zugriff auf die Implementierung hat, nicht dazu in der Lage ist, die sicherheitskritischen Daten aus dieser zu extrahieren. Eine "White Box"-Implementierung des AES-Kryptoalgorithmus ("Advanced Encryption Standard") ist beispielsweise aus der Veröffentlichung "A Tutorial on White-box AES" von James A. Muir, Cryptology ePrint Archive, Report 2013/104 bekannt. Ebenso werden "White Box"-Implementierungen von kryptographischen Algorithmen bzw. Routinen kommerziell vertrieben.

Der Erfindung liegt die Aufgabe zugrunde, Verfahren zum einen zum Testen von und zum anderen zum Härten von Softwareapplikationen zum Durchführen von digitalen Transaktionen bereitzustellen, die eine "White Box"-Implementierung eines kryptographischen Algorithmus umfassen.

### Zusammenfassung der Erfindung

Die vorstehenden Aufgaben werden gemäß der vorliegenden Erfindung durch die jeweiligen Gegenstände der unabhängigen Ansprüche gelöst. Bevorzugte Ausführungsformen der Erfindung werden in den abhängigen Ansprüchen definiert.

Überraschenderweise hat sich bei den Untersuchungen der Erfinder gezeigt, dass sich bei kommerziell erhältlichen "White Box"-Implementierungen von kryptographischen Algorithmen bzw. Routinen der geheime Schlüssel ableiten lässt, und zwar mittels des folgenden Verfahrens gemäß einem ersten Aspekt der Erfindung.

Gemäß einem ersten Aspekt der Erfindung wird ein Verfahren zum Testen einer auf einem Prozessor ausführbaren "White Box"-Implementierung eines kryptographischen Algorithmus bereitgestellt, die mittels eines geheimen Schlüssels aus einem Plaintext einen Ciphertext erzeugt und auf dem Prozessor in Form von Maschinenbefehlen vorliegt, wobei der Prozessor wenigstens ein Register umfasst. Dabei umfasst das Verfahren die folgenden Schritte: (a) das Einspeisen eines Plaintexts einer Vielzahl von Plaintexten in die "White Box"-Implementierung; (b) das schrittweise Auslesen und Abspeichern des Inhalts des wenigstens einen Registers des Prozessors beim schrittweise Abarbeiten der Maschinenbefehle der "White Box"-Implementierung, wobei beim schrittweise Abarbeiten der Maschinenbefehle der "White Box"-Implementierung Zwischenergebnisse erzeugt werden können; (c) das N-malige Wiederholen der Schritte (a) und (b) mit einem weiteren Plaintext der Vielzahl von Plaintexten; und (d) das statistische Auswerten der Inhalte der Register und der Plaintexte, der Zwischenergebnisse und/oder der aus den Plaintexten erzeugten Ciphertexte, indem nach Korrelationen zwischen den Inhalten der Register und den Plaintexten, den Zwischenergebnissen und/oder den Ciphertexten gesucht wird, um den geheimen Schlüssel zu ermitteln.

Vorzugsweise wird der Inhalt eines Registers für einen Plaintext als Funktion der Anzahl der abgearbeiteten Maschinenbefehle analog zu einer Stromkurve bei der differentiellen Stromanalyse behandelt.

Gemäß bevorzugter Ausführungsformen der Erfindung ist die "White Box"-Implementierung Teil einer Softwareapplikation zum Durchführen einer digitalen Transaktion.

Vorzugsweise umfasst der Schritt (d) des statistischen Auswertens der Inhalte der Register und der Plaintexte, der Zwischenergebnisse und/oder der aus den Plaintexten erzeugten Ciphertexte das Auswerten mittels statistischer Verfahren, die aus der differentiellen Stromanalyse bekannt sind.

Gemäß bevorzugter Ausführungsformen der Erfindung ist N derart groß gewählt, dass ein statisches Auswerten der Inhalte der Register und der Plaintexte, der Zwischenergebnisse und/oder der aus den Plaintexten erzeugten Ciphertexte möglich ist. Vorzugsweise werden die Schritte (a) und (b) mit wenigstens 10, 100 oder 1000 unterschiedlichen Plaintexten durchgeführt.

Vorzugsweise wird beim Schritt (b) das Auslesen des Inhalts des wenigstens einen Registers erst ab einem in der "White Box"-Implementierung vordefinierten Maschinenbefehl durchgeführt.

Gemäß bevorzugter Ausführungsformen der Erfindung wird beim Schritt (b) das Auslesen des Inhalts des wenigstens einen Registers ab dem vordefinierten Maschinenbefehl für eine vordefinierte Anzahl M von Maschinenbefehlen durchgeführt.

Vorzugsweise handelt es sich bei der "White Box"-Implementierung eines kryptographischen Algorithmus um eine "White Box"-Implementierung des AES-Algorithmus.

Gemäß bevorzugter Ausführungsformen der Erfindung werden beim Schritt (d) des statistischen Auswertens der Inhalte der Register und der Plaintexte, der Zwischenergebnisse und/oder der aus den Plaintexten erzeugten Ciphertexte solche Zwischenergebnisse und/oder aus den Plaintexten erzeugte Ciphertexte verwendet, die von nur wenigen Bits des geheimen Schlüssels abhängen.

Gemäß einem zweiten Aspekt der Erfindung wird ein Verfahren zum Härten einer auf einem Prozessor ausführbaren "White Box"-Implementierung eines kryptographischen Algorithmus bereitgestellt, die unter Verwendung eines kryptographischen Schlüssels aus einem Plaintext einen Ciphertext erzeugen kann. Dabei ist die "White Box"-Implementierung derart ausgestaltet, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden. Das Verfahren umfasst den Schritt, dass die Lookup-Tabelle derart statistisch permutiert wird, dass die einzelnen Bits der permutierten Lookup-Tabelle im Wesentlichen nicht mit den Bits der Lookup-Tabelle korrelieren. Mit anderen Worten: die Lookup-Tabelle T wird derart mittels einer Permutation P statistisch permutiert, dass die einzelnen Bits der permutierten Lookup-Tabelle T'(x) = P(T(x)) bei zufällig variierendem Input x nicht mit den Bits T(x) korrelieren.

Vorzugsweise umfasst das Verfahren ferner den Schritt des Randomisierens der "White Box"-Implementierung. Hierbei wird unter "Randomisieren" im Wesentlichen verstanden, dass bei jeder Ausführung der "White Box"-Implementierung ein zusätzlicher, variierender Zufall, vorzugsweise in Form von Zufallszahlen, eingestreut wird.

Gemäß einem dritten Aspekt der Erfindung wird ein weiteres Verfahren zum Härten einer auf einem Prozessor ausführbaren "White Box"-Implementierung eines kryptographischen Algorithmus, die unter Verwendung eines kryptographischen Schlüssels aus einem Plaintext einen Ciphertext erzeugen kann. Dabei ist die "White Box"-Implementierung derart ausgestaltet, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden. Das Verfahren umfasst den Schritt des Randomisierens der "White Box"-Implementierung. Hierbei wird unter "Randomisieren" im Wesentlichen verstanden, dass bei jeder Ausführung der "White Box"-Implementierung ein zusätzlicher, variierender Zufall, vorzugsweise in Form von Zufallszahlen, eingestreut wird.

Vorzugsweise umfasst der Schritt des Randomisierens der "White Box"-Implementierung gemäß dem zweiten oder dritten Aspekt der Erfindung den Schritt des zufälligen Verwürfelns des Programmablaufs der "White Box"-Implementierung.

Gemäß bevorzugter Ausführungsformen der Erfindung umfasst der Schritt des Randomisierens der "White Box"-Implementierung gemäß dem zweiten oder dritten Aspekt der Erfindung den Schritt des Einbringens von funktional äquivalenten Code-Varianten, aus denen bei der Ausführung der "White Box"-Implementierung zufällig eine der Code-Varianten ausgewählt werden kann.

Vorzugsweise umfasst der Schritt des Randomisierens der "White Box"-Implementierung gemäß dem zweiten oder dritten Aspekt der Erfindung den Schritt des zufälligen Maskierens von Zwischenergebnissen, Eingabedaten und/oder Ausgabedaten.

Gemäß bevorzugter Ausführungsformen der Erfindung umfasst der Schritt des Randomisierens der "White Box"-Implementierung gemäß dem zweiten oder dritten Aspekt der Erfindung den Schritt des Einbringens von zufälligen Veränderungen, die bei den in der "White Box"-Implementierung vorgenommenen Operationen wieder herausfallen.

Vorzugsweise umfasst der Schritt des Randomisierens der "White Box"-Implementierung gemäß dem zweiten oder dritten Aspekt der Erfindung den Schritt des Randomisierens von tabellierten Funktionen.

Gemäß bevorzugter Ausführungsformen der Erfindung umfasst der Schritt des Randomisierens der "White Box"-Implementierung gemäß dem zweiten oder dritten Aspekt der Erfindung den Schritt des Ersetzens von in der "White Box"-Implementierung verwendeten Lookup-Tabellen durch mehrere funktional äquivalente Varianten von Lookup-Tabellen, wobei bei der Durchführung der "White Box"-Implementierung jeweils eine der funktional äquivalenten Varianten von Lookup-Tabellen zufällig ausgewählt werden kann. Dabei werden die Varianten von Lookup-Tabellen vorzugsweise statistisch derart permutiert, dass die einzelnen Bits der permutierten Lookup-Tabelle im Wesentlichen nicht mit den Bits der ursprünglichen Lookup-Tabelle korrelieren.

Gemäß einem vierten Aspekt der Erfindung wird eine "White Box"-Implementierung eines kryptographischen Algorithmus bereitgestellt, die unter Verwendung eines kryptografischen Schlüssels aus einem Plaintext einen Ciphertext erzeugen kann, wobei die "White Box"-Implementierung mit einem Verfahren gemäß dem zweiten oder dritten Aspekt der Erfindung gehärtet worden ist.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:

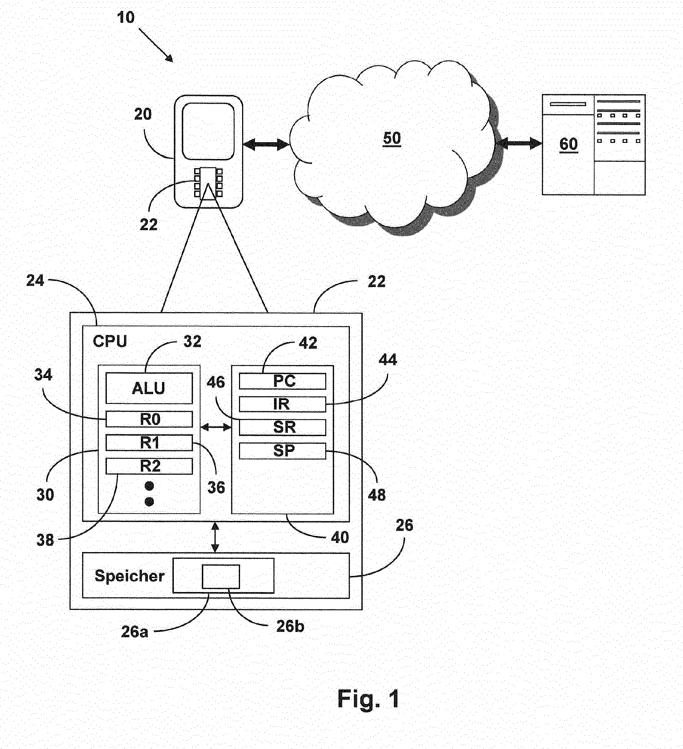

- Fig. 1: eine schematische Darstellung eines beispielhaften Kommunikationssystems mit einem mobilen Endgerät, bei dem die vorliegende Erfindung vorteilhaft zum Einsatz kommen kann,

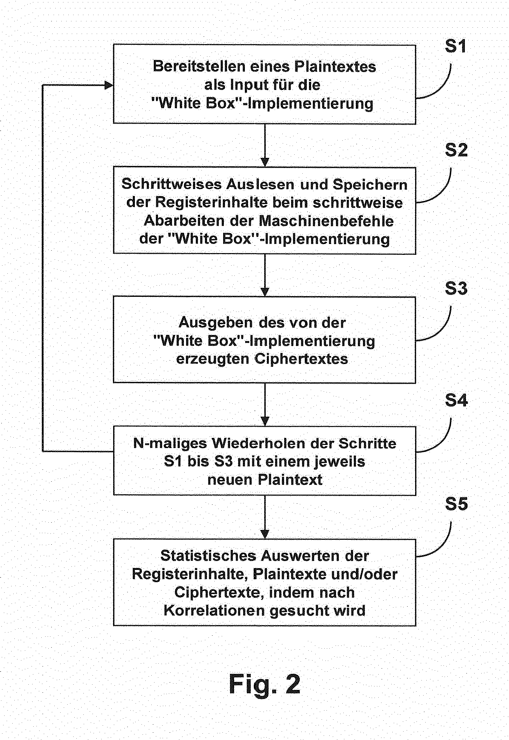

- Fig. 2: ein Flussdiagramm, das den Ablauf eines Verfahrens zum Testen einer Software-applikation zum Durchführen von digitalen Transaktionen gemäß einer bevorzugten Ausführungsform zeigt, die eine "White Box"-Implementierung eines kryptographischen Algorithmus umfasst und auf dem mobilen Endgerät von Figur 1 implementiert ist, und

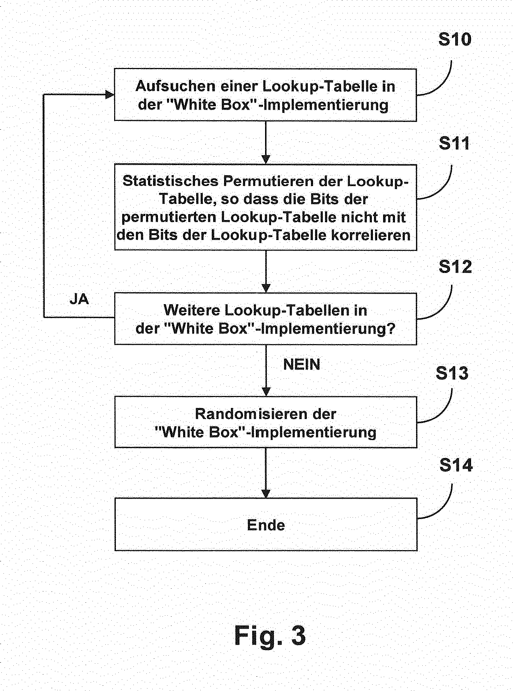

- Fig. 3: ein Flussdiagramm, das den Ablauf eines Verfahrens zum Härten einer Software-applikation zum Durchführen von digitalen Transaktionen gemäß einer bevorzugten Ausführungsform zeigt, die eine "White Box"-Implementierung einer kryptographischen Algorithmus umfasst und auf dem mobilen Endgerät von Figur 1 implementiert ist.

Figur 1 zeigt eine schematische Darstellung eines beispielhaften Kommunikationssystems 10, bei dem die Erfindung vorteilhaft zum Einsatz kommen kann. Das Kommunikationssystem 10 umfasst eine Computereinheit 20 in Form eines mobilen Endgeräts, vorzugsweise in Form eines Smartphones. Das mobile Endgerät 20 ist dazu ausgestaltet, über einen Kommunikationskanal 50 mit einem Server bzw. einem Terminal 60 zu kommunizieren. Bei dem Kommunikationskanal 50 kann es sich beispielsweise um das Internet, ein Mobilfunknetzwerk, einen NFC-Kanal oder dergleichen handeln. Der Server 60 könnte ein NFC-Terminal eines Service-Anbieters sein, mit dem eine Softwareapplikation 26b auf dem mobilen Endgerät 20 Transaktionen durchführen kann, z.B. eine Payment-Transaktion, bei dem die Softwareapplikation einen Bezahlvorgang abwickelt.

Das mobile Endgerät 20 verfügt über einen Chip 22 mit einer zentralen Verarbeitungseinheit ("central processing unit"; CPU) beispielsweise in Form eines Mikroprozessors 24. Bekanntermaßen gehören zu den primären Aufgaben des Prozessors 24 das Ausführen von arithmetischen und logischen Funktionen und das Lesen und Schreiben von Datenelementen, wie dies durch eine auf dem Prozessor 24 ablaufende Softwareapplikation in Form von Maschinenbefehlen definiert wird. Hierzu umfasst der Prozessor 24 bei der in Figur 1 dargestellten Ausführungsform ein Rechenwerk 30 sowie ein Steuerwerk 40.

Das Rechenwerk 30 des Prozessors 24 besteht vorzugsweise im Wesentlichen aus einer arithmetisch-logischen Einheit ("arithmetic logic unit"; ALU) 32 sowie mehreren Arbeits- bzw. Datenregistern, von denen in Figur 1 beispielhaft drei Register, nämlich die Register R0, R1 und R2 dargestellt sind und mit den Bezugszeichen 34, 36 und 38 gekennzeichnet sind. In der Regel wird das Rechenwerk 30 jedoch mehr (wie durch die Punkte in Figur 1 angedeutet) als die in Figur dargestellten drei Register R0, R1 und R2 aufweisen, beispielsweise vier, acht, sechzehn oder mehr Register. Das Rechenwerk 30 ist bekanntermaßen im Wesentlichen dazu ausgestaltet, mittels der ALU 32 Datenelemente gemäß den Maschinenbefehlen der von dem Prozessor 24 ausgeführten Softwareapplikation miteinander zu verknüpfen und die Ergebnisse derartiger Verknüpfungen beispielsweise in den Registern R0, R1 oder R2 zur Weiterverarbeitung abzulegen. Hierbei kann beispielsweise wenigstens eines der Register R0, R1 und R2 als Akkumulator für die ALU 32 dienen.

Das Steuerwerk 40 des Prozessors 24 dient bekanntermaßen im Wesentlichen dazu, die Arbeitsweise des Rechenwerks 30 und gegebenenfalls weiterer Komponenten des Prozessors 24 auf Basis der sukzessiven Abarbeitung der Maschinenbefehle einer auf dem Prozessor 24 ablaufenden Softwareapplikation zu steuern. Hierzu umfasst ebenso das Steuerwerk 40 des Prozessors 24 mehrere Register, und zwar vorzugsweise insbesondere einen Befehlszähler ("program counter"; PC) 42, ein Befehlsregister ("instruction register"; IR) 44, ein Statusregister ("status register"; SR) 46 sowie ein Stapelregister ("stack pointer"; SP) 48.

Der Befehlszähler PC enthält in der Regel jeweils die Speicheradresse des nächsten auszuführenden Maschinenbefehls der auf dem Prozessor 24 ablaufenden Softwareapplikation. Der aktuell auszuführende Maschinenbefehl ist im Befehlsregister IR hinterlegt. Das Statusregister SR ist dazu ausgestaltet, Rückmeldungen aus dem Rechenwerk 30 und dem Steuerwerk 40 aufzunehmen, welche die Adressfortschaltung in der von dem Prozessor 24 ausgeführten Softwareapplikation beeinflussen können. Das Stapelregister SP 48 des Steuerwerks 40 des Prozessors 24 dient zur Verwaltung eines Stapelspeichers (auch "Stack" genannt), der in einer Speichereinheit 26 des mobilen Endgeräts 20 implementiert sein kann. Hierzu enthält das Stapelregister SP 48 des Steuerwerks 40 üblicherweise die Speicheradresse, die das variable Ende des Stapelspeichers in der Speichereinheit 26 definiert.

Die Speichereinheit 26, die in Kommunikationsverbindung mit dem Prozessor 24 steht, kann vorzugsweise einen flüchtigen Arbeitsspeicher (RAM) beispielsweise zur Aufnahme der Maschinenbefehle einer von dem Prozessor 24 auszuführenden Softwareapplikation umfassen. Ferner kann die Speichereinheit 26 einen nichtflüchtigen, vorzugsweise wieder beschreibbaren Speicher umfassen, um beispielsweise im unbestromten Zustand die Maschinenbefehle einer von dem Prozessor 24 auszuführenden Softwareapplikation aufzunehmen. Vorzugsweise handelt es sich bei dem nichtflüchtigen, wieder beschreibbaren Speicher um einen Flash-Speicher (Flash-EEPROM). Dabei kann es sich beispielsweise um einen Flash-Speicher mit einer NAND- oder einer NOR-Architektur handeln. Selbstverständlich kann die Speichereinheit 26 auch einen Festwertspeicher ("read only memory"; ROM) umfassen.

In Figur 1 ist schematisch dargestellt, dass eine Softwareapplikation 26a zum Durchführen einer digitalen Transaktion des mobilen Endgeräts 10 mit dem Server 60 auf der Speichereinheit 26 hinterlegt ist. Erfindungsgemäß umfasst die Softwareapplikation 26a eine "White Box"-Implementierung eines kryptographischen Algorithmus, beispielsweise eine "White Box"-Implementierung des AES-Algorithmus, die in Figur 1 mit der Bezugsziffer 26b gekennzeichnet ist. Dabei ist die "White Box"-Implementierung 26b dazu ausgestaltet, mittels eines in der "White Box"-Implementierung 26b verborgenen (d.h. geheimen) kryptographischen Schlüssels aus einem Plaintext einen Ciphertext zu erzeugen.

Unter weiterer Bezugnahme auf Figur 2 wird nachstehend eine bevorzugte Ausführungsform eines Verfahrens zum Testen der "White Box"-Implementierung 26b von Figur 1 beschrieben.

In Schritt S1 von Figur 2 wird der zu testenden "White Box"-Implementierung 26b (bzw. der Softwareapplikation 26a, welche die zu testende "White Box"-Implementierung 26b umfasst,) ein erster bekannter Plaintext als Input bereitgestellt, um von der "White Box"-Implementierung 26b mittels des darin verborgenen geheimen Schlüssels verschlüsselt zu werden, d.h. einen entsprechenden Ciphertext zu erzeugen.

In Schritt S2 von Figur 2 wird beim schrittweise Abarbeiten der Maschinebefehle, die auf der Speichereinheit 26 hinterlegt sind und die "White Box"-Implementierung 26b (bzw. die Softwareapplikation 26a, welche die zu testende "White Box"-Implementierung 26b umfasst,) definieren, schrittweise die Inhalte der Register R0, R1, R2, ... des Prozessors 24 ausgelesen und abgespeichert. Vorzugsweise werden dabei alle Datenregister des Prozessors 24 ausgelesen. Wie dies dem Fachmann bekannt ist, könnte das Auslesen und Abspeichern der Registerinhalte beispielsweise mittels eines Debuggers durchgeführt werden. Vorzugsweise werden die Registerinhalte bei jedem Schritt, d.h. nach jedem Befehl, ausgelesen und abgespeichert. Beim schrittweise Abarbeiten der Maschinebefehle zur Erzeugung eines Ciphertextes aus dem Plaintext können eine oder mehrere Zwischenergebnisse entstehen.

Insbesondere für den Fall, dass die "White Box"-Implementierung 26b eines kryptographischen Algorithmus Teil einer umfangreichen Softwareapplikation 26a ist, kann es erfindungsgemäß vorteilhaft sein, dass das schrittweise Auslesen und Abspeichern der Registerinhalte des Prozessors 24 erst ab einem definierbaren Maschinenbefehl in der Softwareapplikation 26a durchgeführt wird (vergleichbar einem Haltepunkt ("breakpoint") beim Debuggen).

Wie bereits vorstehend erwähnt, ist das Endergebnis der schrittweisen Abarbeitung der Maschinenbefehle der "White Box"-Implementierung 26b ein zu dem in Schritt S1 eingegebenen Plaintext dazugehöriger Ciphertext, der in Schritt S3 von der "White Box"-Implementierung 26b ausgegeben wird. Vorzugsweise werden der Ciphertext und/oder der dazugehörige Plaintext in Verbindung mit den bereits in Schritt S2 nach jeder Abarbeitung eines Maschinenbefehls gespeicherten Registerinhalten des Prozessors 24 abgespeichert. Überdies können bestimmte bei der Erzeugung des Ciphertextes berechnete Zwischenergebnisse abgespeichert werden.

Erfindungsgemäß werden die Schritte S1 bis S3 von Figur 2 für eine Vielzahl von Plaintexten durchgeführt bzw. wiederholt (siehe Schritt S4 von Figur 2). Vorzugsweise werden die Schritte S1 bis S3 von Figur 2 für mehr als 10, mehr als 100 oder mehr als 1000 unterschiedliche Plaintexte durchgeführt bzw. wiederholt. Wie der Fachmann erkennt, erhält man so für jede Wiederholung der Schritte S1 bis S3 einen jeweiligen Datensatz, der die Registerinhalte des Prozessors 24 zu den jeweiligen Maschinenbefehlen der "White Box"-Implementierung 26b, den eingegebenen Plaintext, ausgewählte Zwischenergebnisse und den dazugehörigen Ciphertext umfasst.

In Schritt S5 von Figur 2 werden die mittels der Schritte S1 bis S4 gewonnenen Datensätze ausgewertet, um Informationen über den für die Erzeugung der Ciphertexte aus den jeweiligen Plaintexten von der "White Box"-Implementierung 26b verwendeten Schlüssel zu gewinnen. Erfindungsgemäß werden hierzu statistische Verfahren angewendet, wie diese aus der differentiellen Stromanalyse ("Differential Power Analysis"; DPA) bekannt sind, bei der es sich bekanntermaßen um eine Form von Seitenkanalangriffen auf Chipkarten handelt. Erfindungsgemäß lassen sich die statistischen Verfahren, die aus der differentiellen Stromanalyse von auf Chipkarten implementierten kryptographischen Algorithmen bekannt sind, besonders vorteilhaft dadurch anwenden, dass der Inhalt eines Registers des Prozessors als Funktion der Anzahl der bereits abgearbeiteten Maschinenbefehle wie eine Stromkurve (Stromverlauf als Funktion des Maschinenbefehls bzw. der Zeit) bei der differentiellen Stromanalyse behandelt wird.
Wie dies dem Fachmann bekannt ist, sucht ein Angreifer bei der differentiellen Stromanalyse für einen geratenen Teil des geheimen Schlüssels in den Stromkurven nach Korrelationen zwischen der Stromaufnahme und Zwischenergebnissen, die für diesen Teilschlüssel und bekannte Plain- oder Ciphertexte berechnet worden sind. Der Angreifer nimmt also an, dass ein Teil des Schlüssel (z.B. ein Byte) einen bestimmten Wert hat und wählt dann einen Rechenschritt im Kryptoalgorithmus, dessen Ergebnis nur von diesem Teil des Schlüssels sowie bekannten Plain- oder Ciphertextdaten abhängt. Für diesen festen Teilschlüsselwert und variierende Plain- oder Ciphertextdaten berechnet er dann das Ergebnis des angegriffenen Rechenschrittes. Findet er signifikante Korrelationen zwischen den berechneten Daten und der bei der Bearbeitung der selben Plain- oder Ciphertextdaten aufgezeichneten Stromaufnahme des angegriffenen Gerätes, dann geht der Angreifer davon aus, dass er den Teilschlüsselwert korrekt bestimmt hat. Finden sich keine signifikanten Korrelationen für diesen Teilschlüsselwert, so wählt der Angreifer einen anderen Wert für den Teilschlüssel. Finden sich für keinen Wert des Teilschlüssels Korrelationen, so schlägt der Angriff auf den Teilschlüssel fehl. Wurde der anzugreifende Rechenschritt geschickt gewählt, ist der in die Rechnung eingehende Teilschlüssel so kurz, dass der Angreifer alle für den Teilschlüssel möglichen Werte ausprobieren kann. Hat der Angreifer einen Teil des Schlüssels erfolgreich bestimmt, wendet er die gleiche Technik an, um weitere Schlüsselteile zu ermitteln. Dabei kann er auch die Tatsache nutzen, dass einige Schlüsselteile bereits erfolgreich bestimmt wurden.

Überraschenderweise hat sich gezeigt, dass bei der analogen Anwendung der aus der differentiellen Stromanalyse bekannten statistischen Verfahren im Rahmen der vorliegenden Erfindung, bei der, wie vorstehend erwähnt, der Inhalt eines Registers des Prozessors als Funktion des Maschinenbefehls wie eine Stromkurve behandelt wird, der in der "White Box"-Implementierung 26b verborgene Schlüssel ermittelt werden kann, indem nach Korrelationen zwischen den Registerinhalten und den Plaintexten, bei der Berechnung erzeugten Zwischenergebnissen und/oder den erzeugten Ciphertexten gesucht wird. Insbesondere sind hier solche bei der Berechnung eines Ciphertextes erzeugte Zwischenergebnisse geeignet, die nur von wenigen Bits des Schlüssels abhängen.

Für weitere Details zu der differentiellen Stromanalyse und den dort eingesetzten statistischen Verfahren zur Ermittlung eines geheimen Schlüssels wird auf die Veröffentlichung "Differential Power Analysis", Paul C. Kocher, Joshua Jaffe, Benjamin Jun, Crypto 1999 verwiesen.

Die Veröffentlichung "White-Box Cryptogrpahy and an AES Implementation", S. Chow, P. Eisen, H. Johnson, P.C. van Oorschot bildet die wesentliche Grundlage für die aus der Literatur bekannten White Box"-Implementierungen von kryptographischen Algorithmen. In dieser Veröffentlichung wird zum Verbergen des Schlüssels in einer "White Box"-Implementierung des AES-Algorithmus die Verwendung einer Vielzahl von Lookup-Tabellen zum Abbilden einer Eingangsbitfolge auf eine Ausgangsbitfolge empfohlen. Für Details hierzu wird auf die genannte Veröffentlichung verwiesen.

Bei einer kommerziell erhältlichen "White Box"-Implementierung des AES-Algorithmus, bei der eine Vielzahl von Lookup-Tabellen verwendet werden, ist es den Erfindern mittels des vorstehend im Zusammenhang mit Figur 2 beschriebenen Verfahrens gelungen, unter Verwendung von einigen hundert Plaintexten den in der "White Box"-Implementierung verborgenen Schlüssel zu extrahieren. Im Detail verläuft der dabei verwendete Angriff auf die "White Box"-Implementierung des AES-Algorithmus folgendermaßen. Der Angreifer sammelt z.B. für 200 verschiedene Plaintexte die Registerinhalte. Dann wählt er eine Stelle im AES aus, an der nur wenige Bits des geheimen Schlüssels in das Ergebnis eingegangen sind, beispielsweise den Ausgang des ersten S-Box Lookup. Wie dies dem Fachmann bekannt ist, hängt dieser von einem Byte des Schlüssels und einem Byte des Plaintextes ab. Jetzt rät der Angreifer einen Wert für dieses eine Byte des Schlüssels. Damit rechnet er alle 200 S-Box-Ausgänge für die 200 Plaintexte aus. Jetzt prüft er, ob an irgendeiner Stelle die Registerinhalte mit diesem S-Box-Ausgang korrelieren. Falls dem so ist, hat der Angreifer vermutlich das Schlüssel-Byte richtig erraten. Falls der Angreifer keine Korrelation findet, rät er einen neuen Wert für das Schlüssel-Byte und wiederholt den Vorgang. In diesem Beispiel muss der Angreifer also schlimmstenfalls alle Werte für ein Byte ausprobieren, d.h. 256 mögliche Kombinationen, was mit verhältnismäßig geringem Aufwand durchführbar ist. Wie der Fachmann erkennt, ist bei Zwischenergebnissen, die von mehr als einem Byte des Schlüssels abhängen, der Aufwand entsprechend größer.

Es hat sich überraschenderweise ergeben, dass sich der in Figur 2 dargestellte Angriff dadurch abwehren oder zumindest erschweren lässt, dass die in einer "White Box"-Implementierung, z.B. der in Figur 1 angedeuteten "White Box"-Implementierung 26b, eingesetzten Lookup-Tabellen statistisch geeignet permutiert werden. Unter einer geeigneten statistischen Permutation einer Lookup-Tabelle wird hier eine Permutation verstanden, bei der die einzelnen Bits der permutierten Lookup-Tabelle nicht mit den Bits der ursprünglichen Lookup-Tabelle korrelieren. Mit anderen Worten: unter einer geeigneten Permutation einer Lookup-Tabelle T wird hier eine Permutation P verstanden, bei der die einzelnen Bits der permutierten Lookup-Tabelle T'(x) = P(T(x)) bei zufällig variierendem Input x nicht mit den Bits T(x) korrelieren.

Figur 3 zeigt in Form eines Flussdiagramms eine bevorzugte Ausführungsform eines Verfahrens zum Härten der "White Box"-Implementierung 26b von Figur 1.

In einem ersten Schritt S10 von Figur 3 wird eine Lookup-Tabelle in der "White Box"-Implementierung 26b ausfindig gemacht.

Diese Lookup-Tabelle wird, wie vorstehend beschrieben, in Schritt S11 von Figur 3 statistisch derart permutiert, dass die einzelnen Bits der permutierten Lookup-Tabelle im Wesentlichen nicht mit den Bits der ursprünglichen Lookup-Tabelle korrelieren, d.h. die Lookup-Tabelle T wird hier derart mittels einer Permutation P permutiert, dass die einzelnen Bits der permutierten Lookup-Tabelle T'(x) = P(T(x)) bei zufällig variierendem Input x nicht mit den Bits T(x) korrelieren.

Für Details zu statistischen Permutationen von Lookup-Tabellen von "White Box"-Implementierungen im Allgemeinen, d.h. Permutationen, bei denen nicht sichergestellt ist, dass die einzelnen Bits der permutierten Lookup-Tabelle im Wesentlichen nicht mit den Bits der ursprünglichen Lookup-Tabelle korrelieren, wird auf die Veröffentlichung "A Tutorial on White Box AES", James A.Muir, Cryptology ePrint Archive, Report 2013/104, http://eprint.iacr.org/2013/104 verwiesen.

Wie in Schritt S12 von Figur 3 dargestellt, kann der Schritt S11 von Figur 3 für weitere, vorzugsweise alle Lookup-Tabellen der "White Box"-Implementierung 26b durchgeführt werden. Nachdem wenigstens eine Lookup-Tabelle der "White Box"-Implementierung 26b erfindungsgemäß in Schritt S11 von Figur 3 "gehärtet" worden ist, können in einem Schritt S13 weitere Maßnahmen ergriffen werden, den in Figur 2 dargestellten Angriff abzuwehren oder zumindest zu erschweren. Allgemein lassen sich diese weiteren Maßnahmen gemäß bevorzugter Ausführungsformen der vorliegenden Erfindung als ein Einstreuen von Zufall in bzw. als ein "Randomisieren" der "White Box"-Implementierung 26b bezeichnen. Hierbei wird unter "Randomisieren" im Wesentlichen verstanden, dass bei jeder Ausführung der "White Box"-Implementierung 26b ein zusätzlicher, variierender Zufall, vorzugsweise in Form von Zufallszahlen, eingestreut wird.

Im Einzelnen können gemäß bevorzugter Ausführungsformen der Erfindung die folgenden weiteren Maßnahmen ergriffen werden:
1. Der Programmablauf der "White Box"-Implementierung 26b kann zufällig verwürfelt werden. Hierzu werden Abschnitte der "White Box"-Implementierung 26b, die parallelisiert werden können, in zufälliger Reihenfolge ausgeführt. Dabei wird die Reihenfolge für jeden Durchlauf, d.h. für jeden neuen Plaintext, neu zufällig erzeugt. Wie dies dem Fachmann bekannt ist, kann beispielsweise der S-Box-Lookup bei einer Implementierung des AES-Algorithmus parallelisiert werden.
2. In die "White Box"-Implementierung 26b können Code-Varianten eingebracht werden, wobei die Code-Varianten trotz unterschiedlichem Programmablauf die gleiche Funktionalität bereitstellen. Bei der Ausführung der "White Box"-Implementierung kann dann zufällig eine dieser funktional äquivalenten Code-Varianten ausgewählt.
3. Die "White Box"-Implementierung 26b kann so modifiziert werden, dass Zwischenergebnisse, Eingabedaten und/oder Ausgabedaten zufällig maskiert werden. Hierzu werden die Zwischenergebnisse, Eingabedaten und/oder Ausgabedaten als Summe zerlegt, wobei jeder einzelne Summand zufällig ist. Ist beispielsweise x ein zu maskierendes Datenelement und r eine Zufallszahl, dann können statt des Datenelements x die Datenelemente "x XOR r" und r verarbeitet werden, wobei die für das Datenelement x ausgelegten Operationen entsprechend an die Arbeit mit den Datenelementen "x XOR r" und r angepasst werden müssen. Allgemeiner kann das Datenelement x als Summe (arithmetisch oder XOR) von mehreren Datenelementen xi, i=1,...,n dargestellt werden. Von den vielen möglichen Darstellungen wird eine zufällig ausgewählt. Die anfangs genannte Darstellung ergibt sich für n=2 mit x1 = x XOR r und x2 = r.
4. Insbesondere im Zusammenhang mit asymmetrischen Kryptoalgorithmen können in die "White Box"-Implementierung 26b zufällige Veränderungen eingebracht werden, die bei den in der Implementierung 26b vorgenommenen Berechnungen wieder herausfallen. Vorzugsweise können hierzu die dem Fachmann bekannten Blinding-Techniken verwendet werden, wie diese beispielsweise in Abschnitt 3.4.1.1 des Dokuments "BSI: Minimum Requirements for Evaluating Side-Channel Attack Resistance of RSA, DSA and Diffie-Hellman Key Exchange Implementations", Part of AIS46, https://www.bs.bund.de/SharedDocs/Downloads/DE/BSI/Zertifizierung/Interpretationen /AIS_46_BSI_guidelines_SCA_RSA_V1_0_e_pdf.pdf beschrieben werden.
5. In die "White Box"-Implementierung 26b können tabellierte Funktionen randomisiert werden. Bei kryptographischen Algorithmen, die auf einem Prozessor ablaufen, sind Funktionen häufig in Form von Tabellen auf einem Speicher hinterlegt, beispielsweise die S-Boxen beim AES- oder DES-Algorithmus. Ist beispielsweise T eine Funktion, die in der "White Box"-Implementierung 26b in Form der Werte T(0), T(1), T(2), ... hinterlegt ist, kann die "White Box"-Implementierung 26b dadurch gehärtet werden, dass stattdessen beispielsweise die Werte T'(k) = u XOR T(k XOR v) hinterlegt werden, wobei die Zufallszahlen u und v bei jedem Durchlauf der gehärteten "White Box"-Implementierung 26b neu gewählt werden.
6. In der "White Box"-Implementierung 26b verwendete Lookup-Tabellen können jeweils durch mehrere funktional äquivalente Varianten von Lookup-Tabellen ersetzt werden. Dabei sind diese Varianten von Lookup-Tabellen vorzugsweise gemäß dem in Figur 3 dargestellten und vorstehend beschriebenen Schritt S11 gehärtet, d.h. statistisch derart permutiert, dass die einzelnen Bits der permutierten Lookup-Tabelle im Wesentlichen nicht mit den Bits der ursprünglichen Lookup-Tabelle korrelieren. Bei der Durchführung der "White Box"-Implementierung kann jeweils eine der funktional äquivalenten Varianten von Lookup-Tabellen zufällig ausgewählt werden.

Obgleich es bevorzugt ist, dass die vorstehend beschriebenen Maßnahmen 1 bis 6 zum "Randomisieren" der "White Box"-Implementierung 26b in Verbindung mit dem in Figur 3 dargestellten und vorstehend beschriebenen statistischen Permutieren von Lookup-Tabellen der " White Box"-Implementierung 26b eingesetzt werden, wird der Fachmann erkennen, dass diese Maßnahmen prinzipiell auch eigenständig dazu eingesetzt werden können, den in Figur 2 dargestellten Angriff auf die "White Box"-Implementierung abzuwehren oder zumindest zu erschweren.

### Bezugszeichenliste:

- 10: Kommunikationssystem
- 20: Mobiles Endgerät
- 22: Chip
- 24: Prozessor
- 26: Speichereinheit
- 26a: Softwareapplikation
- 26b: "White Box"-Implementierung eines Kryptoalgorithmus
- 30: Rechenwerk
- 32: ALU
- 34, 36, 38: Register R0, R1 und R2
- 40: Steuerwerk
- 42: Programmzähler PC
- 44: Befehlsregister IR
- 46: Statusregister SR
- 48: Stapelregister bzw. Stapelzeiger (Stack-Pointer) SP
- 50: Kommunikationskanal
- 60: Server bzw. Terminal

### Liste mit Beispielen

Beispiel 1: Ein Verfahren zum Testen einer auf einem Prozessor 24 ausführbaren "White Box"-Implementierung 26b eines kryptographischen Algorithmus, die mittels eines geheimen Schlüssels aus einem Plaintext einen Ciphertext erzeugt und auf dem Prozessor 24 in Form von Maschinenbefehlen vorliegt, wobei der Prozessor 24 wenigstens ein Register R0, R1, R2 umfasst und das Verfahren die folgenden Schritte umfasst:
   (a) das Einspeisen eines Plaintexts einer Vielzahl von Plaintexten in die " White Box"-Implementierung 26b;
   (b) das schrittweise Auslesen und Abspeichern des Inhalts des wenigstens einen Registers R0, R1, R2 des Prozessors 24 beim schrittweise Abarbeiten der Maschinenbefehle der "White Box"-Implementierung 26b, wobei beim schrittweise Abarbeiten der Maschinenbefehle der "White Box"-Implementierung 26b zur Erzeugung des Ciphertextes aus dem Plaintext Zwischenergebnisse erzeugt werden können;
   (c) das N-malige Wiederholen der vorstehenden Schritte (a) und (b) mit einem weiteren Plaintext der Vielzahl von Plaintexten; und
   (d) das statistische Auswerten der Inhalte der Register R0, R1, R2 und der Plaintexte, der Zwischenergebnisse und/oder der aus den Plaintexten erzeugten Ciphertexte, indem nach Korrelationen zwischen den Inhalten der Register R0, R1, R2 und den Plaintexten, den Zwischenergebnissen und/oder den aus den Plaintexten erzeugten Ciphertexten gesucht wird, um den geheimen Schlüssel zu ermitteln.
Beispiel 2: Ein Verfahren nach Beispiel 1, wobei der Inhalt eines Registers für einen Plaintext als Funktion der Anzahl der abgearbeiteten Maschinenbefehle analog zu einer Stromkurve bei der differentiellen Stromanalyse behandelt wird; oder/und der Schritt (d) des statistischen Auswertens der Inhalte der Register R0, R1, R2 und der Plaintexte, der Zwischenergebnisse und/oder der aus den Plaintexten erzeugten Ciphertexte den Schritt des Auswertens mittels statistischer Verfahren umfasst, die aus der differentiellen Stromanalyse bekannt sind.
Beispiel 3: Ein Verfahren nach Beispiel 1, wobei die "White Box"-Implementierung (26b) Teil einer Softwareapplikation 26a zum Durchführen einer digitalen Transaktion ist.
Beispiel 4: Ein Verfahren nach einem der vorhergehenden Beispiele, wobei N derart groß gewählt ist, dass ein statisches Auswerten der Inhalte der Register R0, R1, R2 und der Plaintexte, der Zwischenergebnisse und/oder der aus den Plaintexten erzeugten Ciphertexte möglich ist. Beispiel 5: Ein Verfahren nach einem der vorhergehenden Beispiele, wobei die Schritte (a) und (b) mit wenigstens 10, 100 oder 1000 unterschiedlichen Plaintexten durchgeführt werden.
Beispiel 6: Ein Verfahren nach Beispiel 1, wobei beim Schritt (b) das Auslesen des Inhalts des wenigstens einen Registers erst ab einem in der "White Box"-Implementierung 26b vordefinierten Maschinenbefehl durchgeführt wird und vorzugsweise weiter beim Schritt (b) das Auslesen des Inhalts des wenigstens einen Registers ab dem vordefinierten Maschinenbefehl für eine vordefinierte Anzahl M von Maschinenbefehlen durchgeführt wird.
Beispiel 7: Ein Verfahren nach einem der vorhergehenden Beispiele, wobei es sich bei der "White Box"-Implementierung 26b eines kryptographischen Algorithmus um eine "White Box"-Implementierung des AES-Algorithmus handelt.
Beispiel 8: Ein Verfahren nach einem der vorhergehenden Beispiele, wobei beim Schritt (d) des statistischen Auswertens der Inhalte der Register R0, R1, R2 und der Plaintexte, der Zwischenergebnisse und/oder der aus den Plaintexten erzeugten Ciphertexte solche Zwischenergebnisse und/oder aus den Plaintexten erzeugte Ciphertexte zur statistischen Analyse verwendet werden, die von nur möglichst wenigen Bits des geheimen Schlüssels abhängen.
Beispiel 9: Ein Verfahren zum Härten einer auf einem Prozessor 24 ausführbaren "White Box"-Implementierung 26b eines kryptographischen Algorithmus, die unter Verwendung eines geheimen Schlüssels aus einem Plaintext einen Ciphertext erzeugen kann, wobei die "White Box"-Implementierung 26b derart ausgestaltet ist, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden, wobei das Verfahren den Schritt umfasst, dass die Lookup-Tabelle derart statistisch permutiert wird, dass die einzelnen Bits der permutierten Lookup-Tabelle im Wesentlichen nicht mit den Bits der Lookup-Tabelle korrelieren.
Beispiel 10: Ein Verfahren nach Beispiel 9, wobei das Verfahren ferner den Schritt des Randomisierens der "White Box"-Implementierung 26b umfasst.
Beispiel 11: Ein Verfahren zum Härten einer auf einem Prozessor 24 ausführbaren "White Box"-Implementierung 26b eines kryptographischen Algorithmus, die unter Verwendung eines geheimen Schlüssels aus einem Plaintext einen Ciphertext erzeugen kann, wobei die "White Box"-Implementierung 26b derart ausgestaltet ist, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden, wobei das Verfahren den Schritt des Randomisierens der "White Box"-Implementierung 26b umfasst.
Beispiel 12: Ein Verfahren nach Beispiel 10 oder 11, wobei der Schritt des Randomisierens der "White Box"-Implementierung 26b einen oder mehrere der folgende Schritte umfasst: den Schritt des zufälligen Verwürfelns des Programmablaufs der "White Box"-Implementierung 26b; den Schritt des Einbringens von funktional äquivalenten Code-Varianten, aus denen bei der Ausführung der "White Box"-Implementierung 26b zufällig eine der Code-Varianten ausgewählt werden kann; den Schritt des zufälligen Maskierens von Zwischenergebnissen, Eingabedaten und/oder Ausgabedaten; den Schritt des Einbringens von zufälligen Veränderungen, die bei den in der "White Box"-Implementierung 26b vorgenommenen Operationen wieder herausfallen; den Schritt des Randomisierens von tabellierten Funktionen.
Beispiel 13: Ein Verfahren nach Beispiel 10 oder 11, wobei der Schritt des Randomisierens der "White Box"-Implementierung 26b den folgenden Schritte umfasst: - den Schritt des Ersetzens von in der "White Box"-Implementierung 26b verwendeten Lookup-Tabellen durch mehrere funktional äquivalente Varianten von Lookup-Tabellen, wobei bei der Durchführung der "White Box"-Implementierung 26b jeweils eine der funktional äquivalenten Varianten von Lookup-Tabellen zufällig ausgewählt werden kann.
Beispiel 14: Ein Verfahren nach Beispiel 13, wobei die Varianten von Lookup-Tabellen statistisch derart permutiert werden, dass die einzelnen Bits der permutierten Lookup-Tabelle im Wesentlichen nicht mit den Bits der ursprünglichen Lookup-Tabelle korrelieren.
Beispiel 15: Eine "White Box"-Implementierung 26b eines kryptographischen Algorithmus, die unter Verwendung eines geheimen Schlüssels aus einem Plaintext einen Ciphertext erzeugen kann, wobei die "White Box"-Implementierung 26b mit einem Verfahren nach einem der Beispiele 11 bis 14 gehärtet worden ist.

## Patentansprüche

1. Verfahren zum Härten einer auf einem Prozessor (24) ausführbaren "White Box"-Implementierung (26b) eines kryptographischen Algorithmus, die unter Verwendung eines geheimen Schlüssels aus einem Plaintext einen Ciphertext erzeugen kann, wobei die "White Box"-Implementierung (26b) derart ausgestaltet ist, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden, wobei das Verfahren den Schritt umfasst, dass die Lookup-Tabelle derart statistisch permutiert wird, dass die einzelnen Bits der permutierten Lookup-Tabelle nicht mit den Bits der Lookup-Tabelle korrelieren.

2. Verfahren nach Anspruch 1, wobei das Verfahren ferner den Schritt des Randomisierens der "White Box"-Implementierung (26b) umfasst, wobei der Schritt des Randomisierens der "White Box"-Implementierung (26b) einen oder mehrere der folgende Schritte umfasst:
- den Schritt des zufälligen Verwürfelns des Programmablaufs der "White Box"-Implementierung (26b);
- den Schritt des Einbringens von funktional äquivalenten Code-Varianten, aus denen bei der Ausführung der "White Box"-Implementierung (26b) zufällig eine der Code-Varianten ausgewählt werden kann;
- den Schritt des zufälligen Maskierens von Zwischenergebnissen, Eingabedaten und/oder Ausgabedaten;
- den Schritt des Einbringens von zufälligen Veränderungen, die bei den in der "White Box"-Implementierung (26b) vorgenommenen Operationen wie-der herausfallen;
- den Schritt des Randomisierens von tabellierten Funktionen.

3. Verfahren zum Härten einer auf einem Prozessor (24) ausführbaren "White Box"-Implementierung (26b) eines kryptographischen Algorithmus, die unter Verwendung eines geheimen Schlüssels aus einem Plaintext einen Ciphertext erzeugen kann, wobei die "White Box"-Implementierung (26b) derart ausgestaltet ist, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden, wobei das Verfahren den Schritt des Randomisierens der "White Box"-Implementierung (26b) umfasst, wobei der Schritt des Randomisierens der "White Box"-Implementierung (26b) einen oder mehrere der folgende Schritte umfasst:
- den Schritt des zufälligen Verwürfelns des Programmablaufs der "White Box"-Implementierung (26b);
- den Schritt des Einbringens von funktional äquivalenten Code-Varianten, aus denen bei der Ausführung der "White Box"-Implementierung (26b) zufällig eine der Code-Varianten ausgewählt werden kann;
- den Schritt des zufälligen Maskierens von Zwischenergebnissen, Eingabe-daten und/oder Ausgabedaten;
- den Schritt des Einbringens von zufälligen Veränderungen, die bei den in der "White Box"-Implementierung (26b) vorgenommenen Operationen wie-der herausfallen;
- den Schritt des Randomisierens von tabellierten Funktionen.

4. Verfahren nach Anspruch 2 oder 3, wobei der Schritt des Randomisierens der "White Box"-Implementierung (26b) den Schritt des Ersetzens von in der "White Box"-Implementierung (26b) verwendeten Lookup-Tabellen durch mehrere funktional äquivalente Varianten von Lookup-Tabellen umfasst, wobei bei der Durchführung der "White Box"-Implementierung (26b) jeweils eine der funktional äquivalenten Varianten von Lookup-Tabellen zufällig ausgewählt werden kann.

5. Verfahren nach Anspruch 4, wobei die Varianten von Lookup-Tabellen statistisch derart permutiert werden, dass die einzelnen Bits der permutierten Lookup-Tabelle nicht mit den Bits der ursprünglichen Lookup-Tabelle korrelieren.

6. "White Box"-Implementierung (26b) eines kryptographischen Algorithmus, die unter Verwendung eines geheimen Schlüssels aus einem Plaintext einen Ciphertext erzeugen kann, wobei die "White Box"-Implementierung (26b) mit einem Verfahren nach einem der Ansprüche 3 bis 5 gehärtet worden ist.
